Europäisches Patentamt

**European Patent Office**

**Office européen des brevets**

(11) Publication number: **0 094 342**

**B1**

# EUROPEAN PATENT SPECIFICATION

(45) Date of publication of patent specification: **07.10.87**

(51) Int. Cl.⁴: **H 05 B 7/101,** H 05 B 7/12

(21) Application number: **83810148.3**

(22) Date of filing: **12.04.83**

(54) Combination electrodes for the electric steel production with Protective jacket of temperature resistant materials on its metal shaft.

(30) Priority: **26.04.82 CH 2586/82**

(43) Date of publication of application:
**16.11.83 Bulletin 83/46**

(45) Publication of the grant of the patent:
**07.10.87 Bulletin 87/41**

(84) Designated Contracting States:
**AT BE CH DE FR GB IT LI LU NL SE**

(56) References cited:
**DE-B-2 164 301**
**DE-B-2 727 314**
**US-A-1 483 507**
**US-A-4 145 564**

(73) Proprietor: **Arc Technologies Systems, Ltd.**
**Box 61**
**Georgetown Grand Cayman (KY)**

(72) Inventor: **Schieber, Franz**
**Finkeng. 94**
**Röthenbach/Pegnitz (DE)**
Inventor: **Zöllner, Dieter, Dr.**
**Händelstrasse 19**
**Schwaig/Nürnberg (DE)**
Inventor: **Lauterbach, Inge, Dr.**
**Peter-Vischer-Strasse 15**
**Nürnberg (DE)**
Inventor: **Koziol, Konrad**
**Kirchhoffstrasse 16**
**Röthenbach/Pegnitz (DE)**
Inventor: **Zöllner, Christine, Dr.**
**Händelstrasse 19**
**Schwaig/Nürnberg (DE)**
Inventor: **Taube, Thomas, Dr.**
**Am Wolfsgraben 11**
**Erlangen-Steudach (DE)**

(74) Representative: **Kügele, Bernhard**
**c/o NOVAPAT-CABINET CHEREAU 5, Place du**
**Molard**
**CH-1204 Genève (CH)**

Courier Press, Leamington Spa, England.

## Description

### Field of the invention

The present invention relates to an arc furnace electrode having an upper, permanent section and a lower consumable section connected thereto, the permanent section comprising a metal shaft surrounded by a protective jacket.

### Background of the invention .

Combination electrodes which are employed in electric arc furnaces for the electric steel production have been known for some time. They comprise an upper metallic section to which a lower section of consumable carbon material is attached by a threaded nipple or a similar means. The two sections may also be directly connected. On account of the high temperatures used, the possibility of arc migration, the existence of splashes of liquid metal and slag as well as other unfavourable influences, it has already been recommended to provide protective coats for the metal shaft. EP—A1 00012573 (British Steel) describes a coat of fireproof material/slag that rests directly on the metal shaft.

GB—PS 1,223,162 (Oestberg) describes a cooling cycle made up of metal ducts which are embedded in ceramic material consisting e.g. of crystallized glass materials on a sillimanite basis or of refractory materials containing aluminium oxide. However, this solution is not applicable as far as the practical operation in the electric arc furnace is concerned. Here, the electrodes are frequently exposed to strong mechanical stresses due to vibrations, splashes of liquid metal, and electrode displacement or electrode handling, which will soon result in the damage of the ceramic part.

US—PS 4 145 564 (Andrew et al) describes the use of electrically conductive ceramic materials which rest on the metal shaft in the form of moldings. These ceramic moldings are put on metallic hook elements and are held by metallic spreaders. Specific examples of temperature-resistant ceramic materials are not given. Neither is this electrode suited for the long-term production of electric steel. Exploratory experiments with ceramic rings of refractory aluminates have shown that these protective ceramic elements, without being damaged, are covered with adhesive metal and slag particles which cannot be removed, so that it is no longer possible to extract the electrode through the opening of the electric arc furnace lid. Lack of safety and high energy losses were the reasons why the extremely high temperatures observed during operation in the metal shaft could not be tolerated any more.

DE—A—2 164 301 discloses a material produced by mixing and firing of graphite, aluminum oxide and silicon carbide. The material is .highly refractory, has a high pressure yield temperature, high abrasion resistance and high resistivity against slag erosion. Use of this material is proposed for linings of rotary furnaces and glass furnaces. ‐

DE—A—2 727 314 discloses a material comprising graphite, carbon, silicon carbide and silicon nitride. This material is also proposed for linings of metallurgical furnaces.

### Object of the invention

The object of the present invention is to create protective jackets for the metal shaft of combination electrodes. In addition to high service time, these protective jackets are designed to guarantee a protection of the electrode that is sufficient for the practical operation of electric arc furnaces. They should also guarantee an economical operation of the electrode as far as energy is concerned, without impairing the mechanical handling of the electrode, including its insertion into and extraction from the electric arc furnace.

This object is met by an arc furnace electrode of the above mentioned type which is characterized by the protective jacket being made of a material composed of a carbon part with graphitic structural elements and a ceramic part of at least one ceramic component.

In general, the compound material contains a carbon share in the amount of approx. 20—80 weight per cent, while the ceramic component accounts for the remaining percentage. For the invention it is especially advantageous if the carbon material amounts to 35—60 weight per cent, with the most favourable range lying between 40 and 55 weight per cent.

Besides the carbon material and the ceramic component, the compound material may also contain binding agents, impregnating matter, and similar auxiliary agents, which, in general, account for approx. 15 weight per cent of the total material. Although such additional binding agents, impregnating matter, etc. are not always required, it has frequently proved useful to include binding agents and impregnating matter in the amount of approx. 1—9 weight per cent in relation to the total material, depending on the type of carbon component and the type of ceramic component selected. Binding and impregnating agents may help to obtain a denser, less porous, and more compact material of a single component, e.g. of carbon, or they facilitate a more favourable combination of carbon and ceramic components. Binding agents and impregnating substances are e.g. materials which have been traditionally used for the production of electrographites on the basis of premium cokes. They include pitches, tars, tar-pitches, phenolic resins, etc.

However, the compound material may also contain ceramic components which have binding qualities of their own, e.g. ductile, extremely fire-proof clays, etc.

Within the framework of the invention it is preferable that the carbon share of the compound material contain graphitic structural elements which, in general, account for 25—90 weight per cent of the carbon share. Favourable results are usually obtained if the share of graphitic structural elements in the carbon component lies between 40 and 80 weight per cent in relation to the carbon component.

Depending on the requirements to which the electrode is exposed in the production of electric steel, within the framework of the invention there are different possibilities of selecting the carbon component. The graphitic structural elements may consist of natural graphite, electrographite or mixtures thereof. The non-graphitic share of the carbon component may be made up of anthracite, by-product coke, petroleum coke, tar-pitch coke, carbon black, etc. The carbon component may, therefore, be a mixture of graphite of varying origin and of anthracite, cokes of different specifications, etc.

If the production of electric steel involves extremely tough conditions, e.g. in the HP and UHP range, to which the electrode is exposed, it is preferable to have a carbon component that is entirely of graphite. The results obtained were especially favourable, when natural graphite was used for this purpose. When natural graphite is used, dark shale graphites with large scales are preferred.

When natural graphite is used, the qualities used should be free from low melting point impurities or from admixtures which, in the presence of oxygen, at high temperatures produce or release gaseous products, e.g. pyrite, carbonates which are decomposable at high temperatures, etc.

However, not all conditions require that the carbon component contains graphitic elements, which means that in individual cases the carbon material may be free from such elements. This is the case when the electrode is exposed to less rough conditions of the electric steel production. In general, longer life times, improved heat transfer values, and less adhesion of slag material are achieved, if the share of graphite in the compound material is higher. This may be influenced by the type of carbon component on the one hand, and its quantity on the other.

Within the framework of the invention it is preferable to provide protective coats which contain graphitic structural elements in the amount of 30—50 weight per cent in relation to the total weight of the compound material. As mentioned earlier, depending on the operating conditions, the type of electrode used, etc. it is, however, possible to obtain satisfactory results, even if the graphite share in relation to the compound material is beyond the specified preferred range.

In relation to the total weight of the compound material, the ceramic component may amount to approx. 20 to 80 weight per cent, with amounts in the range of 40 to 65 weight per cent yielding especially favourable results.

In general, the compound material contains the carbon component and the ceramic component in the form of particles, fibers, or layers in homogeneous or heterogeneous distribution. As a rule, this helps to obtain a ceramic "matrix", in which the carbon share is embedded and selectively distributed. Thus, the high temperature properties of both components complement each other in a favourable way, which results in surprisingly long service times. In individual cases it is, however, possible to aim at an inhomogeneity of the individual components within the compound material, although this is done for specific applications only.

The compound material to be used in accordance with the invention may be produced in many different ways. As a rule, the usual methodologies for the production of compound materials are applicable, with due regard for the properties of refractory, i.e. ceramic, components and carbon components.

A typical procedure for the production of compound material is to mix the original particles, i.e. the carbon component as well as the ceramic component, if necessary by adding water and binding agents, then to mold them, and finally to burn them. It is frequently favourable to add water, as it facilitates kneading of the material until it is completely homogeneous.

In certain cases, depending on how and how much of the ceramic component is added, a period of maturation may follow. During this period the materials are left to themselves for some hours or for some weeks in an atmosphere of increased humidity, if necessary.

Having been mixed and having "matured", the material is molded by pressing, tamping, or pouring. Within the framework of the invention it is preferable to provide a protective coat made up of moldings which may be put on the metal shaft of the combination electrode in a removable manner. Such moldings are e.g. pipes, pipe sections, rings, and ring sectors. To obtain a specially favourable cover of the metal shaft, these individual moldings may be designed in a special way. With regard to the design of such removable moldings reference is made to P 31 02 776.8, the German patent application of the applicant, the contents of which shall herewith be considered part of this text.

The molding of such parts which are put on the metal shaft in a removable way may also be achieved by means of specific techniques which include vibration shaping and extrusion.

Within the framework of the invention it is preferable if the compound material contains the carbon particles in predominantly anisotropic alignment. A privileged orientation in longitudinal direction is obtained by application of the following procedures: extrusion, continuous vibration, isostatic pressing with movable shape, manual forming, and centrifugal casting. Such compound material which contains the carbon particles in predominantly longitudinal direction, is characterized by a high oxidation resistance, little susceptibility to adhesive slag, and good ablation properties, if it is aligned parallel to the axis of the electrode.

However, the compound material used in accordance with the invention may also contain the carbon particles in transverse direction, which is achieved by block pressing, tamping, injection moulding, cold and hot isopressing, vibration, pouring, and spraying. Especially favourable orientations, which result in an increased thermal conductivity of the molding, are obtained by hitting or vibration.

According to a preferred embodiment of the invention the compound material has a thermal conductivity of less than 210 kJ/mhK.

In general, the compound material is burned at temperatures of up to 1600°C, preferably at temperatures between 1200°C and 1400°C. If the burning and sintering temperatures exceed 500°C, the operator should see to it that no fresh air is supplied and that air circulation is avoided. In individual cases, burning may be conducted in several stages, so that a burning stage at a low temperature is followed by a burning stage at high temperatures. If compound materials of graphite and MgO are used, it is customary to have a preliminary burning stage in a temperature range between 900°C and 1400°C, which, depending on the quantity of MgO, may be followed by renewed burning at a higher temperature. In general, it is desirable to start with a preliminary drying stage at a rather low temperature to extract any humidity left and then to increase the temperature only gradually over long periods until the burning temperature is reached.

The ceramic component contained in the compound materials used in accordance with the invention may be selected from a broad range of refractory compounds. Generally, these compounds are refractory oxides, carbides, nitrides as well as mixtures thereof. Combinations of oxides or silicates of Zr, Al or Mg or nitrides of Ti, Si, boron compounds of Ti or Zr or carbides of Si, Zr or Ti are good examples. Fireclay, clay, kaolins, silicon dioxide, sillimanite, $Al_2O_3$, MgO, sintered dolomite, magnesium-chromium oxide ore, forsterite, silicon carbide, silicon nitride, zircon oxides, zircon mineral, titanium oxide, aluminium titanate containing silicate, spinels, and mixtures thereof have proved useful ceramic components of the compound material used in accordance with the invention. Preferable among them are refractory clays, MgO, silicon carbide, silicon nitrides, and aluminium titanates containing silicates.

It may be desirable that the ceramic and/or carbon component(s), at least partly, take(s) the form of fibers, e.g. kaolinite fiber, asbestos fiber, carbon fiber, etc. Boron oxides and/or refractory rare earth compounds may be added to the ceramic components mentioned above.

The combination of the ceramic and the carbon component by type and quantity as well as their subsequent pressing and sintering is controlled by keeping the thermal expansion coefficient of the compound material below $15 \times 10^{-6}$/K. Compound materials which are preferred in accordance with the invention have a thermal expansion coefficient in the range of $(2-12) \cdot 10^{-6}$/K. By complying with these values, the heat supplied to the protective elements as a result of the melting operations is dissipated via the cooling system of the electrode in such a way that the temperature of the protective coat can be kept at relatively low values, without having to maintain high liquid coolant pressures. As a consequence, the protective elements will have especially long service times.

It may be useful to design the moldings in such a way that the temperature of the copper shaft, which is cooled at a water pressure of less than 8 bar, is kept below 300°C.

According to the present invention the protective jacket of the material as described above may be in the form of pipes, rings, segments or sectors which are put on the metal shaft of the electrode in a removable manner. According to a preferred embodiment of the invention the moldings rest on the electrode or are attached to it by covered screwed connections, threads, etc. In this context it is of special importance that at least the lower part of the metal shaft, which is inserted into the electric arc furnace, is completely covered with the materials used according to the invention. The exterior protective zone of the moldings should be free from support elements or spreaders which are easy to melt, as they constitute preferred current paths in case of unwanted arc displacements. As a result, the metal shaft may melt in spite of being almost completely covered.

A specific field of application of the materials used according to the invention are combination electrodes the metal shaft of which is internally cooled. The materials used in accordance with the invention are specifically geared to this purpose, as their preferred zone of thermal conductivity permits the optimum dissipation of heat observed on the protective elements.

The invention also comprises the moldings as such, e.g. protective rings, pipes, sectors, or segments, which are made of the compound material proposed in this document. Therefore, the preceding description fully applies also to such moldings as pipes, rings, or ring segments.

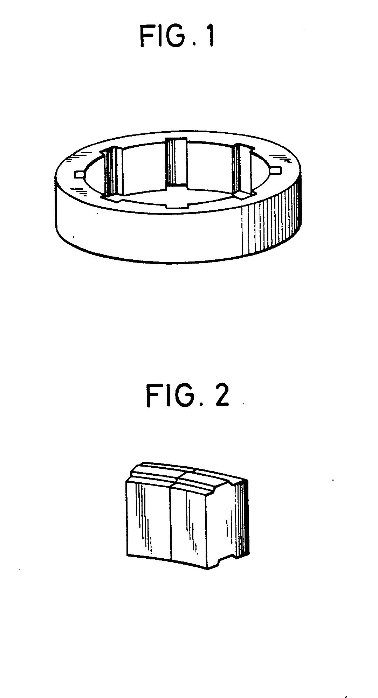

Figure 1 shows a cover ring which has guideways on the inside. By means of these guideways the ring can be placed on the metal shaft of the combination electrode. Figure 2 illustrates the segment or sector of a protective ring. By joining several of these elements it is possible to cover the total area of the metal shaft. These elements may e.g. be attached to the electrode by an inside thread not shown in the drawing.

The invention has a number of surprising advantages. Under the conditions of arc furnace operations the protective coats are characterized by long service times and a surprisingly low susceptibility to oxidation. They show good mechanical properties, particularly a high pressure resistance. Due to the thermal conductivity of the compound materials the temperature of the metal shaft of the electrode can be kept within the desired range, which in general is below 500°C, without excessive pressure and excessive circulation speeds of the liquid coolant or without excessive heat dissipation from the furnace. Even when the combination electrode was operated for a long time, there was no problem of adhesive metal or adhesive slag, and the electrode could be inserted and removed through the opening of the electrode lid.

Finally, as the protective coat is designed in the form of removable moldings, little maintenance and repair work will be required.

In the following the invention is described by examples which, however, should not be considered restrictive in any way:

Example 1

The upper section of the electrode used consisted of copper, which was water-cooled by a system of supply and return ducts. The lower section of graphite was connected to the copper shaft by a threaded graphite nipple.

The part of the copper shaft that was inserted into the electric arc furnace was completely covered by 3 rings resting on each other, the lowest of which was screwed to the lower part of the copper shaft by an inside thread.

3 electrodes each were inserted into a 50 t furnace, with solid scrap as furnace charge. The furnace was operated in 3 phases with a maximum phase current of 50 KA and a voltage of 490 V.

The compound material of the protective rings consisted of natural graphite from Sri Lanka (49 weight per cent), natural clay (37 weight per cent, composition: approx. 56% $SiO_2$, 33% $Al_2O_3$, 1.5% FeO, 0.9% CaO+MgO, 1.4% alkali, humidity—remaining percentage), SiC (6%) and silica sand (remaining percentage).

The original materials were ground in dry condition and mixed for hours in a chaser mill, with water being added for mixing purposes.

After this procedure the material was left untouched for one week at room temperature and then molded to the desired shape of a ring. Having, been dried at a temperature of approx. 110°C to 140°C, the rings were slowly burned in a muffle kiln at a temperature of approx. 1370°C.

After 150 charges of high-quality steel the rings made of this material still constituted a sufficient protection of the electrode the operation of which was free from disorders.

Example 2

The compound material was produced in an analogous manner by homogenizing, molding, drying, and burning the following materials:

| | |
|---|---|
| bauxite | 40 weight per cent |
| hollow corundum melted $Al_2O_3$ | 11 weight per cent |
| tar coke | 22 weight per cent |
| Alabama graphite | 27 weight per cent |

Example 3

| | |
|---|---|
| silicon carbide | 71 weight per cent |
| electrographite with approx. 70% graphitic structural elements | 25 weight per cent |
| carbon (from binding agent tar pitch) | remaining percentage |

Example 4

| | |
|---|---|
| MgO (electrically melted) | 39 weight per cent |
| Alabama graphite | 20 weight per cent |
| anthracite | 31 weight per cent |
| magnesium oxide-magnesium chloride as binding agent | remaining percentage |

Example 5

| | |
|---|---|
| aluminium silicate partly in the form of fibers ("Fiberfrax", trademark of The Carborundum Co., Niagara Falls, USA) | 36 weight per cent |
| premium petroleum coke | 57 weight per cent |
| phenol formaldehyde (phenolic resin) | 7 weight per cent |

The homogenized materials were suspended with water and vacuum pressed. After a 2 hour drying period at a temperature of 170°C—190°C the material was burned at temperatures ranging between 500°C and 600°C.

Example 6

| | |
|---|---|
| Al₂O₃ | 39 weight per cent |
| TiO₂ | 28 weight per cent |
| kaolin | 3 weight per cent |
| magnesium silicate | 0.5 weight per cent |
| natural graphite | 11 weight per cent |
| petroleum coke from carbon (from binding agent tar pitch) | remaining percentage |

The protective rings the materials of which were composed as listed above and manufactured in an analogous manner, made it possible to operate the electrode without disorder, while long service times were obtained at the same time.

Comparative experiment

The electrode employed corresponded to US—PS 4,145,564. The protective rings used were of refractory clay with a low content of iron oxide (clay as described in Example 1).

However, several failures occurred during the operation of this electrode. Already after a few charges slag adhesion was such that a removal of the electrode through the opening of the electric arc furnace lid was no longer possible. In a further experiment, arc migration caused the metal shaft to melt via the metallic spreaders and suspension elements.

**Claims**

1. An arc furnace electrode having an upper, permanent section and a lower consumable section connected thereto, the permanent section comprising a metal shaft surrounded by a protective jacket, characterized by the protective jacket being made of a material composed of a carbon part with graphitic structural elements and a ceramic part of at least one ceramic component.

2. The electrode of claim 1, wherein the carbon part amounts to 20—80% by weight of the total jacket material and the ceramic part is 80—20% by weight.

3. The electrode of claim 2, wherein the carbon part is 35—60% by weight, the ceramic part is 40—65% and binders and impregnation agents are 0—15%.

4. The electrode of any one of the preceding claims, wherein 25—90% of the carbon part are comprised of graphitic structural elements consisting of natural and, or electrographite, the non-graphitic parts of the carbon part being anthracite, by-product coke, tar, pitch coke and/or petrol coke.

5. The electrode of any one of claims 1—3, wherein the entire carbon part is comprised of graphite.

6. The electrode of any one of the preceding claims, the material of the protective jacket being a composition of particles, fibers or layers in homogeneous or heterogeneous distribution.

7. The electrode of any one of the preceding claims, wherein the material of the protective jacket has been manufactured by mixing of the initial components, eventually adding binders and water, moulding and firing, whereby the carbon particles are oriented in a main orientation.

8. The electrode of any one of the preceding claims, wherein the ceramic component is comprised of a material selected from fireclay, clay, kaoline, silicon dioxide, sillimanite, Al₂O₃, MgO, sintered dolomite, magnesium-chromium oxide ore, forsterite, silicon carbide, silicon nitride, zircon oxides, zircon mineral, titanium oxide, aluminum titanate containing silicate, spinels and/or mixtures thereof and/or of a porous material selected from kieselguhr, expanded fireclay, expanded clay, expanded vermiculite, expanded perlite, spherical corundum, and/or mixtures thereof.

9. The electrode of claim 8, wherein the ceramic component comprises an admixture of boron oxide or highly refractory rare earth metals.

10. The electrode of any one of the preceding claims, wherein the protective jacket is comprised of several individual rings, ring sectors, or tubes.

**Patentansprüche**

1. Lichtbogenofenelektrode mit einem oberen permanenten Abschnitt und einem unteren, hiermit verbundenen konsumierbaren Abschnitt, wobei der obere Abschnitt einen, von einem Schutzmantel umgebenen Metallschaft aufweist, dadurch gekennzeichnet, dass der Schutzmantel aus einem Material hergestellt ist, welches aus einem Kohlenstoffanteil mit graphitischen Strukturelementen sowie einem Keramikanteil mit mindestens einer keramischen Komponente besteht.

2. Elektrode nach Anspruch 1, dadurch gekennzeichnet, dass der Kohlenstoffanteil in einer Menge von etwa 20 bis 80 Gew.-% und der Keramikanteil von etwa 80—20 Gew.-% vorliegt.

3. Elektrode nach Anspruch 2, dadurch gekennzeichnet, dass der Kohlenstoffanteil in einer Menge von 35 bis 60 Gew.-%, der Keramikanteil in einer Menge von 40 bis 65 Gew.-% und Binde-und Imprägniermittel in einer Menge von 0 bis 15 Gew.-% vorliegen.

4. Elektrode nach irgend einem der vorhergehenden Ansprüche, dadurch gekennzeichnet, dass der Kohlenstoffanteil 25 bis 90 Gew.-% graphitische Strukturelemente enthält, die aus Natur-und/oder Elektrographit bestehen, und dass die nicht-graphitischen Anteile des Kohlenstoffanteils aus Anthrazit, Zechenkoks, Teerpechkoks und/oder Petrokoks gebildet sind.

5. Elektrode nach einem der Ansprüche 1—3, dadurch gekennzeichnet, dass der gesamte Kohlenstoffanteil aus Graphit besteht.

6. Elektrode nach einem der vorhergehenden Ansprüche, dadurch gekennzeichnet, dass das Material des Schutzmantels aus einem Verband von Teilchen, Fasern oder Schichten in homogener oder inhomogener Verteilung besteht.

7. Elektrode nach einem der vorhergehenden Ansprüche, dadurch gekennzeichnet, dass das Material des Schutzmantels durch Vermischen der Ausgangsbestandteile gegebenenfalls unter Zufügung von Wasser und Bindemittel, Formen und Brennen unter Ausbildung einer Vorzugsrichtung der Kohlenstoffpartikeln erzeugt ist.

8. Elektrode nach einem der vorhergehenden Ansprüche, dadurch gekennzeichnet, dass die keramische Komponente aus einem Material besteht, welches unter Schamotte, Ton, Kaolinen, Siliziumdioxid, Silimanit, $Al_2O_3$, MgO, gesintertem Dolomit, Magnesium-Chromoxiderz, Forsterit, Siliziumkarbid, Siliziumnitrid, Zirkonoxiden, Zirkonmineral, Titanoxid, silikathaltigem Aluminiumtitanat, Spinellen und/oder Gemischen hiervon ausgewählt ist, und/oder dass sie poröses Material umfasst, das unter Kieselgur, Blähschamotte, Blähton, expandiertem Vermiculit, expandiertem Perlit, Hohlkugelkorund, und/oder Gemischen hiervon ausgewählt ist.

9. Elektrode nach Anspruch 8, worin die keramische Komponente einen Zusatz von Boroxid oder hochfeuerfesten seltenen Erden umfasst.

10. Elektrode nach einem der vorhergehenden Ansprüchen, dadurch gekennzeichnet, dass der Schutzmantel aus mehreren individuellen Ringen, Ring ausschnitten oder Rohren besteht.

**Revendications**

1. Electrode de four à arc ayant une section supérieure, permanente, et une section inférieure consommable connectée à la précédente, la section permanente comportant un fût métallique entouré par une chemise de protection, caractérisée en ce que la chemise de protection est constituée d'un matériau comportant une partie carbone avec des éléments structurels graphitiques et une partie céramique comprenant au moins un composant un céramique.

2. Electrode selon la revendication 1, dans laquelle la partie carbone s'élève à 20—80% en poids du matériau total de la chemise et la partie céramique à 80—20% en poids.

3. Electrode selon la revendication 2, dans laquelle la partie carbone s'élève à 35—60% en poids, la partie céramique à 40—65% et des liants et agents d'imprégnation s'élèvent à 0—15%.

4. Electrode selon l'une quelconque des revendications précédentes, dans laquelle 25—90% de la partie carbone sont constitués d'éléments structurels graphitiques comprenant du graphite naturel et/ou d'électrographite, les parties non graphitiques de la partie carbone étant l'anthracite, du coke de sous-produit, du goudron, du coke de brai et/ou du coke de pétrole.

5. Electrode selon l'une quelconque des revendications 1 à 3, dans laquelle la totalité de la partie carbone est constituée de graphite.

6. Electrode selon l'une quelconque des revendications précédentes, le matériau de la chemise de protection étant une composition de particules, de fibres ou de couches dans une distribution homogène ou hétérogène.

7. Electrode selon l'une quelconque des revendications précédentes, dans laquelle le matériau de la chemise de protection est fabriqué en mélangeant les composants initiaux, éventuellement en ajoutant des liants et de l'eau, en moulant et en cuisant, d'ou il résulte que les particules de carbone sont orientées dans une orientation principale.

8. Electrode selon l'une quelconque des revendications précédentes, dans laquelle le composant céramique est constitué d'un matériau choisi parmi: l'argile réfractaire, l'argile, le kaolin, le bioxyde de silicium, la sillimanite, $Al_2O_3$, MgO, la dolomite frittée, le minerai d'oxyde de magnésium-chrome, la forstérite, le carbure de silicium, le nitrure de silicium, les oxydes de zircon, le minerai de zircon, l'oxyde de titane, le titanate d'aluminium contenant du silicate, les spinels et/ou leurs mélanges, et/ou d'un matériau poreux choisi parmi: le kieselguhr, l'argile réfractaire dilatée, l'argile dilatée, la vermiculite dilatée, la perlite dilatée, le corindon sphérique et/ou leurs mélanges.

9. Electrode selon la revendication 8, dans laquelle le composant céramique comprend un mélange d'oxyde de bore ou de métaux des terres rares hautement réfractaires.

10. Electrode selon l'une quelconque des revendications précédentes, dans laquelle la chemise de protection est constituée de plusieurs anneaux, secteurs d'anneau ou tubes individuels.

# FIG . 1

# FIG. 2

1